Europäisches Patentamt

European Patent Office

Office européen des brevets

(19)

(11) Publication number: **0 411 814 A2**

# EUROPEAN PATENT APPLICATION

(21) Application number: **90308125.5**

(22) Date of filing: **25.07.90**

(51) Int. Cl.5: **F16D 65/16**

(30) Priority: **04.08.89 GB 8917886**

(43) Date of publication of application:
**06.02.91 Bulletin 91/06**

(84) Designated Contracting States:
**DE ES FR GB IT**

(71) Applicant: **LUCAS INDUSTRIES PUBLIC LIMITED COMPANY**
**Great King Street**
**Birmingham, B19 2XF(GB)**

(72) Inventor: **Anderson, Robert Alan**
**38, Langcomb Road, Shirley, Solihull**
**West Midlands, B90 2PR(GB)**
Inventor: **Nightingale, Paul William**
**4, Pendleton Grove**
**Acocks Green, Birmingham, B27 7LT(GB)**

(74) Representative: **Stringer, David Hiram et al**
**W.P. THOMPSON & CO Coopers Building**
**Church Streeteet**
**Liverpool L1 3AB(GB)**

(54) Improvements in or relating to disc brakes.

(57) The present specification discloses a disc brake comprising a caliper (3) and a torque taking member (5), a hydraulic actuator being provided in the caliper (3) and comprising a piston (15) which is axially slidable within a bore (21) in the caliper (3) under hydraulic pressure, the piston (15) passing through an aperture in the torque taking member (5) and thereby supporting the caliper (3) on the torque taking member (5). To prevent the ingress of dirt etc., it is necessary to provide a protective boot (23; 33; 45). However, this has previously been a complex, and therefore expensive, component.

The present invention provides a protective annular boot (23; ,33; 45) which comprises a boot portion (25, 27; 35, 39; 47, 49) and a bearing ring (29; 37; 55). The boot portion (25; 27; 35, 39; 47, 49) comprises two boot sections, one end region of one boot (25; 35; 47) being secured around the periphery of the piston (15) and extending from the piston (15) to the aperture, wherein the bearing ring (29; 37; 55) is located, the bearing ring (29; 37; 55) slidably engaging around the piston (15). The boot extends through the aperture and then to the caliper housing (3) by another boot section (27; 39; 49) of the boot portion. This boot construction is simpler and cheaper than previously conceived constructions.

FIG. 4

## IMPROVEMENTS IN OR RELATING TO DISC BRAKES

The present invention relates to a disc brake for use in a motor vehicle.

In particular, the present invention relates to a disc brake for use in the smaller family and city type car where cost is a main consideration, together with weight, size and of course, an acceptable level of performance. More particularly, the present invention relates to a disc brake of a type wherein the brake has an hydraulic actuator comprising a piston which is axially slidable under the effect of hydraulic pressure, in a bore in a caliper which straddles a braking disc, the piston passing through an aperture provided in a torque taking member of the brake, or a guide plate secured to the torque taking member, to thus simply support the caliper. Friction pad assemblies are applied to the braking disc by movement of the hydraulic piston and the caliper relative to the torque taking member.

A brake of the above type is disclosed in European Patent No. 0211452 (Bendix), the piston being a two-part piston with one part being axially slidable through an aperture, i.e. cylindrical bore, in a guide plate which has lateral arms by means of which the guide plate is detachably bolted to a torque taking member. A flexible protective boot extends between the outer surface of the guide plate and the caliper, to help prevent the ingress of dirt etc. to the hydraulic actuator, as does an annular seal provided in the cylindrical bore of the guide plate, through which the piston extends. However, the lateral arms of the guide plate require a complex and expensive construction of protective boot which extends over the laterally extending arms, or a boot with apertures through which the arms can extend, said apertures being potential leakage points. Also, the annular seal is subject to wear due to piston contact and movement so that there is no positive seal to prevent the ingress of dirt etc. to the actuator. Further, as the piston is of two-part construction, the flexible boot extends across the path of part of the piston thereby limiting the available piston movement.

A further brake of the above type is disclosed in British Patent No. 1257615 (Teves), the piston of the hydraulic actuator extending through an aperture in a guide ring which floats within an aperture in a torque taking member, with an annular protective boot extending from a caliper housing, through the aperture and partially around the guide ring so that the piston slides axially on the boot within the ring, the boot also serving as a seal for the hydraulic actuator. Clearly the frictional contact between the flexible protective boot and the piston can require additional actuator pressure to overcome these frictional forces. Further, there is no positive seal to prevent the ingress of dirt etc. into the hydraulic actuator as the boot wears due to piston movement and contact therewith.

The aim of the present invention is to provide a disc brake of the above type wherein the piston is positively guided with respect to the torque taking member, and the piston and bore forming the hydraulic actuator are positively sealed at all times.

According to the present invention there is provided a disc brake comprising a caliper and a torque taking member, a hydraulic actuator being provided in the caliper and comprising a piston which is axially slidable within a bore in the caliper under hydraulic pressure, the piston passing through an aperture in the torque taking member and thereby supporting the caliper on the torque taking member, one end region of a protective annular boot being positively secured to the periphery of the piston and extending from the piston through the aperture, with the other end region of the boot being positively secured to the caliper.

By virtue of the construction of the present invention, the piston is supported on the protective boot within the aperture, and preferably the part of the boot located in said aperture is constructed, at least in part, as a bearing ring made of a suitable low friction bearing material, e.g. a suitable plastics PTFE or sinter material. Further, whilst the protective boot may be made in two sections i.e. a flexible unitary construction boot portion comprising two boot sections, and the bearing ring, it may also be made in three separate sections, the boot portion then comprising two separate boot sections. In either case one boot section extends between the piston and bearing ring in the aperture, and another boot section extends from the bearing ring on the other side of the aperture, to the caliper itself.

The construction of the present invention thus provides for the positive support of the piston on the torque taking member whilst also positively sealing the hydraulic actuator against the ingress of dirt etc. at all times.

In a preferred embodiment of the present invention a guide plate is detachably bolted to the torque taking member, the aperture through which the piston projects being formed in the guide plate.

Further, with the protective boot in the above mentioned three-part form with two separate boot sections and a bearing ring, assembly can be completed according to the following sequence:-

1. Firstly the bearing ring is located in the aperture in the guide plate;
2. Then the boot sections are each located one on either side of the guide plate with one end region of each of the boot sections located in a groove in the bearing ring;

3. The piston is then inserted through the bearing ring and the free end region of one of the boot sections is located in a groove extending around the periphery of one end region of the piston; and

4. The above produced sub-assembly is then offered to a caliper housing, the piston being slid into the bore in the caliper housing until the free end region of the other boot section can be sealingly secured to the caliper housing. Then the guide plate is bolted to the torque taking member.

With the above construction there is a tendency as the pads wear, for the caliper to tilt as the brake is applied. To counter this and possible vibration problems, there is preferably provided a wire spring which is mounted on the outboard limb of the caliper, and is constructed so as to engage against respective parts of the torque taking member to provide the desired spring bias to counter tilting of the caliper on application of the brake.

The present invention will now be further described, by way of example, with reference to the accompanying drawings in which:-

Fig.1 is a plan view of a preferred embodiment of disc brake constructed according to the present invention;

Fig.2 is a section along line A-A in Fig. 1;

Fig.3 is a rear elevational view of the embodiment illustrated in Figs. 1 and 2;

Fig.4 is a sectional view along line B-B in Fig. 2;

Fig.5 is an enlarged detail of an alternative guide plate and protective boot arrangement to that of the embodiment of Figs. 1 to 4;

Fig.6 is an enlarged detail of a further alternative arrangement of guide plate and protective boot construction; and

Fig.7 is an enlarged detail of a still further arrangement of guide plate and protective boot construction.

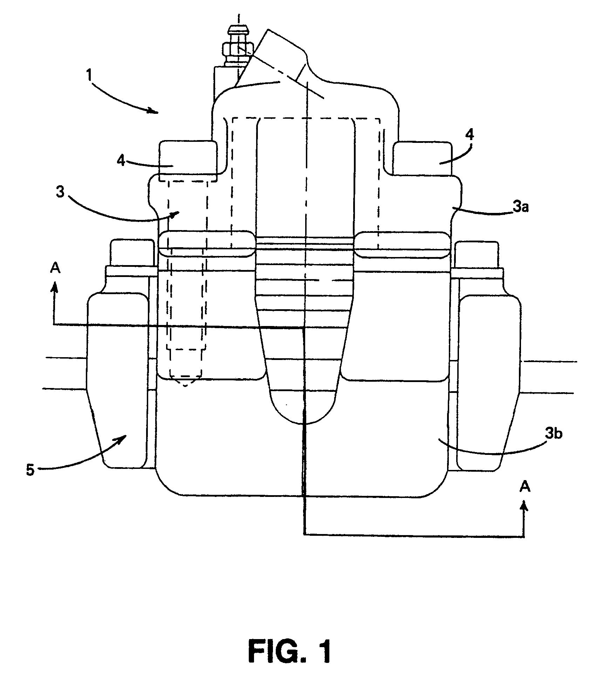

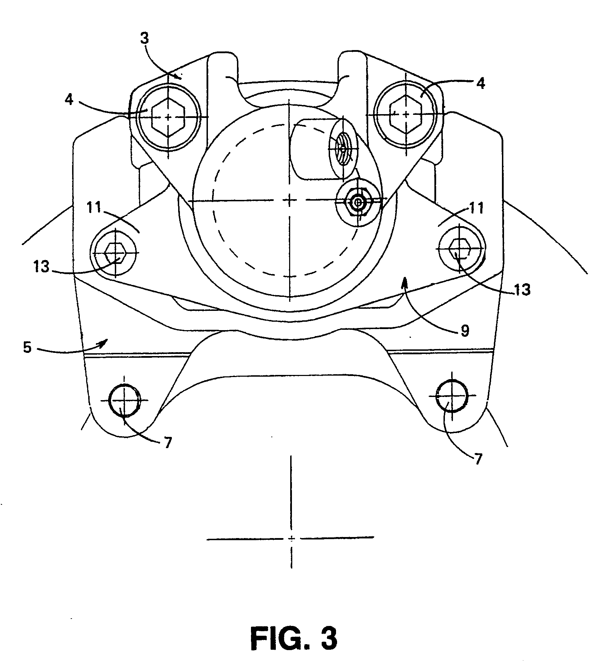

The disc brake 1 illustrated in Figs. 1 to 5 of the accompanying drawings comprises a clamp member 3, i.e. a caliper housing, which straddles a fixed support member 5, i.e. a torque taking member, which, in use, is fixedly mounted on the motor vehicle by means of bolts (not shown) which pass through apertures 7. The clamp member 3 is constructed of two parts 3a and 3b which are bolted together by bolts 4. Alternatively the clamp members can be of unitary construction. Also, the torque taking member can alternatively be integral with part of the motor vehicle. A thin planar guide plate 9 having two laterally projecting arms 11 is bolted to the torque taking member 5 by means of bolts 13 which passs through apertures provided in said laterally projecting arms 11 and into complementary bores in the torque taking member 5. The central region of the guide plate 9 has an aperture through which a piston 15 of the hydraulic actuator passes. The front face 17 of the piston 15 is arranged tp act on the inboard friction pad assembly 19, the rear portion of the piston 15 being axially slidable in a bore 21 in the caliper housing 3. Thus the caliper 3 is supported on the guide plate 9 and thus the torque taking member 5, by means of the piston 15.

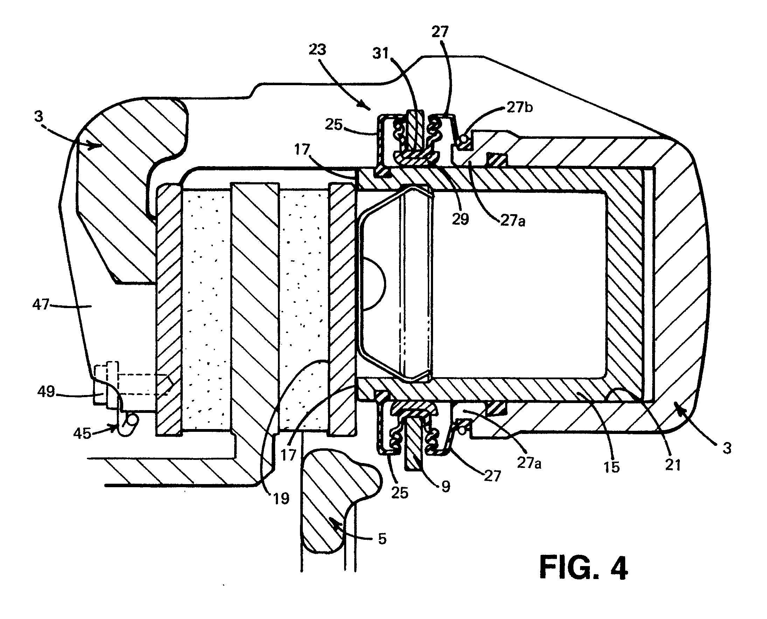

As seen in Fig.4 in a preferred arrangement, a protective boot 23 positively seals the front end region of the piston 15 to the caliper housing 3, thus positively preventing the ingress of any dirt etc. to the hydraulic actuator 15,21. This protective boot 23 has a three-part construction comprising two flexible boot sections 25,27 and a bearing ring 29 made of a suitable low friction plastics material. Alternatively the boot sections 25, 27 can be a unitary construction. The boot 23 as a whole is annular with one free end region of one boot section 25 engaging in a groove provided in the periphery of the piston 15 adjacent to the front end of the piston 15, the other end region of this boot section 25 being secured in a groove in the annular bearing ring 29 which is located in the aperture in the guide plate 9. The other boot section 27 has an extended portion 31 which engages in a groove in the bearing ring 29 on the other side of the guide plate 9, this extension 31 projecting through the aperture in the guide plate 9. The free end region of this other boot section 27 engages around an annular portion 27a provided on the caliper housing 3 and is secured in position by a circlip 27b. The circlip 27b can be omitted, the annular free end region of the other boot section then itself gripping the annular portion 27a and preferably engaging in a suitably located annular groove. Thus, as the piston 15 moves through the aperture in the guide plate 9 it slides over the bearing ring 29 and the flexible boot sections 25,27 flex to cater for the adjustment in position of the caliper 3, piston 15 and guide plate 9 relative to one another.

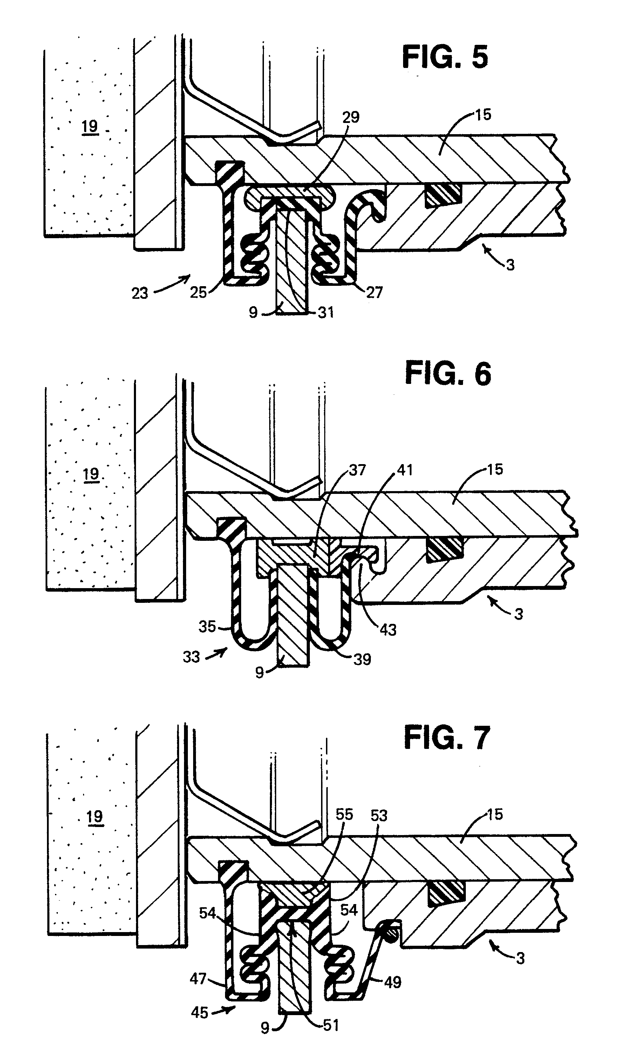

Fig.5 illustrates an alternative method of securing the free end region of the other boot section 27 to the caliper housing 3, the free end region of this other boot section 27 being located in an annular groove provided in an inner wall region of the caliper housing 3.

A further alternative guide plate and protective boot arrangement 33 is shown in axial cross-section in Fig.6. This arrangement 33 also comprises a three-part boot construction with one boot section 35 extending between the front end of the piston 15 and a groove in an annular bearing ring 37 located in the aperture of the guide plate 9. In contrast to the arrangement of Fig.5, the bearing ring 37 engages against the edge of the aperture in the guide plate 9 and the other boot section 39 engages purely in a groove in the bearing ring 37 on the other side of the guide plate 9. Further, the free end region of this other boot section 39 engages in a groove in a plastic retaining ring 41 which surrounds the piston 15 and is contiguous to the bearing ring 37. Alternatively the retaining ring 41 can be made of sintered material, as a metal pressing, or of any other desired suitable material and construction. This latter construction enables a sub-assembly to be constructed comprising the piston 15, guide plate 9, two flexible boot sections 35,39, bearing ring 37 and retaining ring 41. This sub-assembly can then be located as a unit in a brake with the rear of the piston 15 being inserted into the bore 21 in the caliper member 3. By pushing the piston further into the said bore 21, the retaining ring 41 eventually engages the mouth of the bore 21 and snaps around an inwardly projecting lip 43 provided in the mouth of the bore 21 to thus secure the free end region of the said other boot section 39 to the caliper housing 3. Having attained this position the lateral arms of the guide plate 9 can then be bolted to the torque taking member 5, thereby completing the assembly of the brake.

A still further guide plate and protective boot arrangement 45 is shown in axial cross-section in Fig. 7. This arrangement comprises a two-part boot construction with the annular boot sections 47,49 being integrally formed with a central annular region 51 which engages in the aperture in the guide plate 9, having inwardly directed, spaced apart lips 53 between which the bearing ring 55 is located and held, and outwardly directed, spaced apart lips 54 which grip each side of the guide plate 9 to hold the said central region 51 in position in said aperture. As in the previously described arrangements the free end regions of the boot sections are secured to the piston and caliper housing respectively.

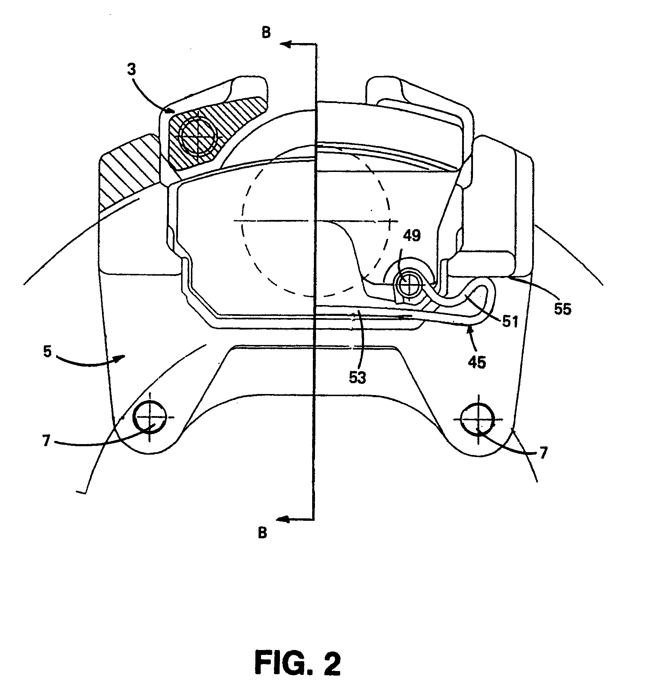

As the friction pad assemblies wear in the above-described brake 1 there is an increasing tendency for the caliper member 3 to tilt as the brake is applied. To counter this tendency a wire spring 45 (see Fig.2) is provided on the limb 47 of the caliper member 3. The wire spring engages around two spaced apart bolts or pins 49 and then has portions 51 which project in opposite directions and then curve back to join together in a central portion 53. Said portions 51 each engage a surface 55 on the torque taking member to bias the caliper against tilting.

The present invention thus provides a simple and relatively cheap disc brake construction wherein the piston supports the caliper slidingly on the torque taking member, the protective boot/bearing arrangement positively sealing the hydraulic actuator against the ingress of any dirt etc. at all times during the life of the brake, whilst providing an effective low friction guide means for the caliper member.

## Claims

1. A disc brake comprising a caliper (3) and a torque taking member (5), a hydraulic actuator being provided in the caliper (3) and comprising a piston (15) which is axially slidable within a bore (21) in the caliper (3) under hydraulic pressure, the piston (15) passing through an aperture in the torque taking member (5) and thereby supporting the caliper (3) on the torque taking member (5), characterised in that one end region (25; 35; 47) of a protective annular boot (23; 33; 45) is positively secured to the periphery of the piston (15) and extends from the piston (15) through the aperture, with the other end region (27; 39; 49) of the boot (23; 33; 45) being positively secured to the caliper (3).

2. A disc brake according to claim 1, wherein the part of the boot (23; 33; 45) located in the aperture is constructed, at least in part, as a bearing ring (29; 37; 55).

3. A disc brake according to claim 2, wherein the boot (23; 33; 45) is comprised of the bearing ring (29; 37; 55) and a boot portion (25; 27; 35; 39; 47, 49) with one boot section (25; 35; 47) of the boot portion extending between the piston (15) and the bearing ring (29; 37; 55) on one side of the aperture, and another boot section (27; 39; 49) extending from the bearing ring (29; 37; 55) on the other side of the aperture, and the caliper (3) itself.

4. A disc brake according to claim 3, wherein said sections (25, 27) of the boot portion are separate units with one of said sections (27) extending through the aperture around the radially outer periphery of the bearing ring (29).

5. A disc brake according to claim 3, wherein said sections (25, 27; 35, 39) of the boot portion are separate units which respectively engage the bearing ring (29; 37) on opposite sides of said aperture.

6. A disc brake according to claim 5, wherein the end region of said another boot section (39) remote from the bearing ring (37) engages around a retaining ring (41) which surrounds the piston (15) and is adjacent to the bearing ring (37), the retaining ring (41) being engageable with a region of said bore (21) in the caliper member (3).

7. A disc brake according to claim 3, wherein the boot portion (47, 49) is of unitary construction.

8. A disc brake according to claim 7, wherein the boot portion (47, 49) has a central region (51) with two spaced-apart radially inwardly directed lips (53) between which the bearing ring (55) is located.

9. A disc brake according to claim 8, wherein the central region (51) of the boot portion (47, 49) has two spaced-apart radially outwardly directed lips (54) which engage one on each side of the said aperture.

10. A disc brake according to any one of the preceding claims, wherein the aperture is formed in a plate-like member (9) which is bolted to the remainder of the torque taking member (5).

**FIG. 1**

**FIG. 2**

**FIG. 3**

FIG. 4

**FIG. 5**

**FIG. 6**

**FIG. 7**